(19) Europäisches Patentamt

European Patent Office

Office européen des brevets

(11) Veröffentlichungsnummer: **0 356 951 B1**

(12) **EUROPÄISCHE PATENTSCHRIFT**

(45) Veröffentlichungstag der Patentschrift: **02.02.94**

(21) Anmeldenummer: **89115792.7**

(22) Anmeldetag: **26.08.89**

(51) Int. Cl.5: **G02B 6/28**, G02B 6/12

(54) **Faseroptisches Bandfilter.**

(30) Priorität: **27.08.88 DE 3829118**

(43) Veröffentlichungstag der Anmeldung:
**07.03.90 Patentblatt 90/10**

(45) Bekanntmachung des Hinweises auf die
Patenterteilung:
**02.02.94 Patentblatt 94/05**

(84) Benannte Vertragsstaaten:
**CH DE ES FR GB IT LI SE**

(56) Entgegenhaltungen:
**EP-A- 0 256 388**

**PATENT ABSTRACTS OF JAPAN, Band 11,
Nr. 156 (P-578)[2603], 21. Mai 1987; & JP-A-61
292 102**

**PATENT ABSTRACTS OF JAPAN, Band 10,
Nr. 338 (P-516)[2394], 15. November 1986; &
JP-A-61 141 407**

**ELECTRONICS LETTERS, Band 22, Nr. 4, 13.
Februar 1986, Seiten 211-212, Stevenage,
Herts, GB; K. OKAMOTO et al.: "Fibre-optic
spectral filters consisting of concatenated
dual-core fibres"**

(73) Patentinhaber: **Alcatel SEL Aktiengesellschaft
Lorenzstrasse 10
D-70435 Stuttgart(DE)**

(72) Erfinder: **Köster, Wilhelm
Stuttgarter Strasse 85
D-7147 Eberdingen(DE)**

(74) Vertreter: **Pohl, Herbert, Dipl.-Ing et al
Alcatel SEL AG
Patent- und Lizenzwesen
Postfach 30 09 29
D-70449 Stuttgart (DE)**

## Beschreibung

Die Erfindung betrifft ein faseroptisches Bandfilter, bei dem ein Abschnitt einer Doppelkernfaser an seinem einen Ende mit einer einen lichtleitenden Kern aufweisenden Glasfaser und an seinem anderen Ende mit einer anderen einen lichtleitenden Kern aufweisenden Glasfaser oder mindestens einem anderen Doppelkern-Faserabschnitt verbunden ist.

Derartige faseroptische Bandfilter sind bekannt, z.B. aus K. Okamoto u. J. Noda, Fiber-optic spectral filter consisting of concatenated dual-core fibers, Optical Fibers Conference 1986, p. 62 oder aus JP-A-61 292 102 oder aus Electronics Letters, Vol. 22, No. 4, 13th February 1986, Seiten 211-212. Dabei ist es jeweils derselbe und im Zentrum des Doppelkern-Faserabschnitts angeordnete Kern, der zu beiden Seiten an den nur einen Kern der direkt anschließenden Glasfaser anschließt bzw. mit dieser verspleißt ist. Der andere Kern des Doppelkern-Faserabschnitts schließt an keinem seiner Enden an einen Kern einer Glasfaser an, so daß kein unmittelbarer Lichtübertritt von diesem Kern in den einer anschließenden Glasfaser oder eines anschließenden Glasfaserabschnitts erfolgt. Dieser zweite und exzentrisch angeordnete Kern tritt mit dem im Zentrum angeordneten und an die benachbarten Kerne dicht anschließenden Kern infolge der Kopplung der elektromagnetischen Felder in Wechselwirkung. Die Doppelkernfaserabschnitte dienen als Koppelelemente, wobei der Kopplungseffekt von der Wellenlänge abhängt. Dabei sind die Kerndurchmesser der Doppelkern-Faserabschnitte gleich. Die Filter sind mittels kaskadenartiger Einfügung mehrerer Doppelkern-Faserabschnitte aufgebaut, wobei sich jeweils ein Doppelkern-Faserabschnitt und eine Ein-Kern-Glasfaser abwechseln. Ein derartiges faseroptisches Bandfilter ist von der Herstellung und vom konstruktiven Aufbau her aufwendig und weist ferner eine relativ hohe Einfügedämpfung auf.

Demgegenüber liegt der Erfindung die Aufgabe zugrunde, ein faseroptisches Bandfilter der eingangs genannten Art derart weiterzubilden, daß es einen wesentlich einfacheren Aufbau, bessere Selektivität und eine geringere Einfügedämpfung hat.

Erfindungsgemäß wird diese Aufgabe dadurch gelöst, daß die beiden Kerne des einen Doppelkern-Faserabschnitts derart unterschiedlich ausgewählt sind, daß ihre effektiven Kernbrechzahlen bei der zu übertragenden Wellenlänge ($\lambda_1$) gleich und ansonsten ungleich sind, daß ferner die Länge (1) des einen Doppelkern-Faserabschnitts gleich $m \cdot l_1/2$ ist, wobei $l_1/2$ die Länge ist, bei der eine Lichtwelle mit der Wellenlänge $\lambda_1$ einmal vollständig von dem einen Kern des einen Doppelkern-Faserabschnitts in den anderen Kern überkoppelt, und m eine ungerade Zahl (m = 1, 3, ...) ist und das jeweils an dem einen Ende des einen Doppelkern-Faserabschnitts der eine Kern dieses Doppelkern-Faserabschnitts an den Kern der anschließenden einen Glasfaser und an dem anderen Ende der andere Kern an den Kern der anschließenden anderen Glasfaser oder an einen Kern des anschließenden anderen Doppelkern-Faserabschnitts direkt anschließt.

Vorteilhafte Weiterbildungen der Erfindung sind in den Unteransprüchen definiert.

Bei einem derartigen sehr einfachen und eine hohe Selektivität aufweisenden Bandfilter mit geringer Einfügungsdämpfung hängt die Bandpasscharakteristik alleine noch von der Länge des Doppelkern-Faserabschnitts ab, der für den jeweiligen Anwendungsfall zugeschnitten werden muß. Die Breite des Bandpasses ist in etwa proportional zu 1/Länge des Doppelkern-Faserabschnitts und kann entsprechend vorgegeben werden. Ein derartiges faseroptisches Bandfilter eignet sich vorzugsweise zum Einsatz bei optischen Multiplex-Schaltungen zur Selektion von Wellenlängen in mit optischen Wellenleitern aufgebauten Fernmeldenetzen.

Bei dem bekannten faseroptischen Bandfilter (Okamoto/Noda) verwendet man zur Herstellung der Filter viele hintereinandergeschaltetet Doppelkern-Faserabschnitte, wobei jeder dieser Faserabschnitte mit den anderen verbunden werden muß, was, abgesehen vom Aufwand, immer mit Verlusten verbunden ist. Die Zahl der Doppelkern-Faserabschnitte sollte daher so klein wie möglich gehalten werden; diese Bedingung ist bei der Erfindung erfüllt. Außerdem weisen die Kerne dieser Faserabschnitte des bekannten Filters gleichen Durchmesser und gleiche Brechzahl auf; d.h. es gibt außer der gewünschten Durchlaßwellenlänge weitere Spektralbereiche, für die das Filter durchlässig ist.

Ein Ausführungsbeispiel der Erfindung und ihrer vorteilhaften Weiterbildungen wird im folgenden unter Bezugnahme auf die beigefügten Zeichnungen beschrieben. Es stellen dar:

Figur 1     ein Ausführungsbeispiel;

Figur 2     die Abhängigkeit der Kernbrechzahlen der beiden Kerne des Doppelkern-Faserabschnittes von der Wellenlänge;

Figur 3     ein zweites Ausführungsbeispiel;

Figur 4     den Verlauf der Dämpfung in Abhängigkeit von der Wellenlänge bei einem Filter nach Figur 2.

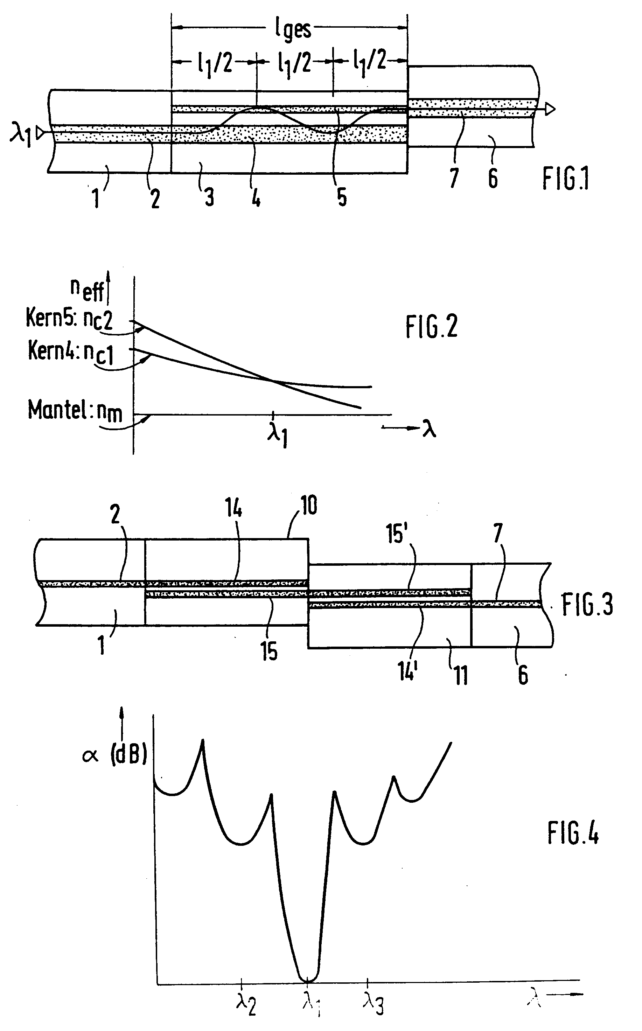

Das Bandpassfilter nach Fig. 1 wird gebildet durch eine Glasfaser 1 mit Kern 2, einen sich daran anschließenden Doppelkern-Faserabschnitt 3 mit Kernen 4 und 5, sowie eine sich daran anschließende Glasfaser 6 mit Kern 7. Die beiden Kerne 4 und 5 des Doppelkern-Faserabschnittes 3 weisen unterschiedliche effektive Kernbrechzahlen $n_{eff}$ auf, so

$n_{c1}$ für den Kern 4 und $n_{c2}$ für den Kern 5. Sie verändern sich in Abhängigkeit von der Wellenlänge in der in Fig. 2 dargestellten Weise und sind bei der Wellenlänge $\lambda_1$ gleich. $n_m$ ist die Brechzahl des Mantels. Eine derartige Abhängigkeit der Kernbrechzahlen von der Wellenlänge läßt sich durch geeignete Auswahl der Materialien realisieren. Das ist dem Fachmann bekannt und braucht daher im vorliegenden Zusammenhang nicht weiter ausgeführt werden. Die Kerndurchmesser sind unterschiedlich. Die Auswahl der Durchmesser in Verbindung mit dem Material ergibt die gewünschten Verläufe nach Fig 2. Im Ausführungsbeispiel nach Fig. 1 und 2 hat der Kern 5 den kleineren Durchmesser, jedoch die höhere Kernbrechzahl.

Eine Lichtschwingung mit der Wellenlänge $\lambda_1$, die der genannten Voraussetzung genügt, daß bei dieser die effektiven Kernbrechzahlen $n_{eff}$ beider Kerne gleich sind, nimmt den in Fig 1. dargestellten Verlauf, d.h. sie wird beim Übertritt von Kern 2 in Kern 4 sinusförmig abgelenkt, so daß sie nach einer Strecke $l_1/2$, $3(l_1/2)$ usw. jeweils ganz im Kern 5 verläuft und in diesem koaxial sich ausbreitet. Danach tritt die Lichtschwingung in den Kern 7 der sich anschließenden nur einen Kern aufweisenden Glasfaser 6 über. Für alle Wellenlängen, die von $\lambda_1$ abweichen, ergibt sich nur ein unvollständiges Übertreten der Lichtleistung vom Kern 4 zum Kern 5 des Doppelkern-Faserabschnitts 3. Die Lichtstrahlung verbleibt also größtenteils im Kern 4 und läuft von dort nicht weiter, da das in Fig. 1 rechte Ende des Kernes 4 auf das Material des Mantels der Glasfaser 6, nicht jedoch auf Material eines Kerns direkt auftrifft. Auf diese Weise entsteht eine außerordentlich gute Selektivität mit geringer Einfügungsdämpfung im Bereich der Bandfrequenz bzw. der zu übertragenden Wellenlänge $\lambda_1$, während für die nicht den Verlauf nach Fig. 1 aufweisende Lichtstrahlung mit einer Wellenlänge ungleich $\lambda_1$ eine sehr hohe Dämpfung gegeben ist.

Die Kerndurchmesser bestimmten zusammen mit der Kernbrechzahl die Steilheiten der Kurven in Figur 2. Die dort beschriebene effektiven Brechungsindizes bestimmten die Ausbreitungsgeschwindigkeit der vom jeweiligen Kern geführten Welle. Eine vollstänidge Überkopplung von Kern 4 zu Kern 5 kann aber nur stattfinden, wenn die effektiven Brechungsindizes beider Kerne 4 und 5 gleich sind; im anderen Fall ist die Überkopplung nur unvollständig. Sind die Durchmesser und Brechzahlen beider Kerne gleich, kann auch bei anderen Wellenlängen eine vollständige Überkopplung auftreten; die gewünschte Filterwirkung ginge damit verloren. Typische Durchmesser wären z.B. 9 $\mu m$ bzw. 7 $\mu m$ und Brechzahldifferenzen $(n_5 - n_4)/n_3 \simeq 0,3 \%$. Die Kurve nach Figur 4 zeigt die Durchlaßcharakteristik des Bandfilters. Beim Ausführungsbeispiel nach Fig. 3 sind zwei gleiche, jedoch gegeneinander um 180° verdrehte Doppelkern-Faserabschnitte 10 und 11 hintereinander angeordnet. Der erste Doppelkern-Faserabschnitt 10 weist Kerne 14 und 15, der zweite Doppelkern-Faserabschnitt 11 Kerne 14' und 15' auf. Dabei ist die Aneinanderfügung derart vorgenommen, daß der Kern 15 des Doppelkern-Faserabschnitts 10 an seinem rechten Ende auf den Kern 15', mit dem er hinsichtlich Material und Durchmesser identisch ist, trifft. Auf diese Weise findet beim Übergang vom Doppelkern-Faserabschnitt 10 zum Doppelkern-Faserabschnitt 11 nur ein geringer Verlust an Lichtstrahlung statt. Links schließt Kern 14 an Kern 2, die ebenfalls gleichen Durchmesser haben, rechts Kern 14' an Kern 6, der ebenfalls gleichen Durchmesser hat, an.

Jeder Kern stößt also an einer Seite an einem Kern gleichen Materials und gleicher Kerndicke an. Auf diese Weise ist die Einfügungsdämpfung bei $\lambda_1$ extrem niedrig. Gleichzeitig wird die Nachbarkanalunterdrückung verdoppelt. Die identischen Doppelkern-Faserabschnitte sind gleich lang, erzeugen den gleichen Fleckdurchmesser und sind konzentrisch in der Mitte des jeweiligen Doppelkern-Faserabschnitts angeordnet. Der Verdrehwinkel zwischen den Doppelkern-Faserabschnitten kann auch kleiner als 180° sein. Wichtig ist nur, daß die Lichtführung zwischen den Kernen 14 und 14' ausreichend unterbrochen ist. Die Sperrdämpfung dieses Filters ist etwa doppelt so hoch wie nach Figur 4.

**Patentansprüche**

1. Faseroptisches Bandfilter, bei dem ein Abschnitt einer Doppelkernfaser (3, 10) an seinem einen Ende mit einer einen lichtleitenden Kern (2) aufweisenden Glasfaser (1) und an seinem anderen Ende mit einer anderen einen lichtleitenden Kern (7) aufweisenden Glasfaser (6) oder mindestens einem anderen Doppelkern-Faserabschnitt (11) verbunden ist, **dadurch gekennzeichnet,** daß die beiden Kerne (4, 5; 14, 15) des einen Doppelkern-Faserabschnitts (3, 10) derart unterschiedlich ausgewählt sind, daß ihre effektiven Kernbrechzahlen bei der zu übertragenden Wellenlänge ($\lambda_1$) gleich und ansonsten ungleich sind, daß ferner die Länge (l) des einen Doppelkern-Faserabschnitts (3, 10) gleich $m \cdot l_1/2$ ist, wobei $l_1/2$ die Länge ist, bei der eine Lichtwelle mit der Wellenlänge $\lambda_1$ einmal vollständig von dem einen Kern (4; 14) des einen Doppelkern-Faserabschnitts in den anderen Kern (5; 15) überkoppelt, und m eine ungerade Zahl (m = 1, 3, ...) ist und daß jeweils an dem einen Ende des einen Doppelkern-Faserabschnitts (3; 10) der eine Kern (4, 14) dieses Doppelkern-Faserabschnitts an den Kern (2) der anschließenden einen Glasfaser (1) und an dem anderen Ende der andere Kern (5, 15) an den Kern (7) der anschließenden anderen Glasfaser (6) oder an einen Kern (15') des anschließenden anderen Doppelkern-Faserabschnitts (11) direkt anschließt.

2. Faseroptisches Bandfilter nach Anspruch 1, dadurch gekennzeichnet, daß mindestens zwei Doppelkern-Faserabschnitte (10, 11) aneinander angefügt sind, wobei jeder Doppelkern-Faserabschnitt einen Kern (15) aufweist, dessen Durchmesser gleich dem Durchmesser eines Kerns (15') des anliegenden Doppelkern-Faserabschnitts ist, und daß die Doppelkern-Faserabschnitte (10, 11) derart aneinandergefügt sind, daß jeweils die Kerne (15, 15') mit gleichem Kerndurchmesser direkt aneinander anschließen.

3. Faseroptisches Bandfilter nach Anspruch 2, dadurch gekennzeichnet, daß der Durchmesser und die Brechzahl des anderen Kerns (14, 14') eines der Doppelkern-Faserabschnitte (10, 11) gleich dem Durchmesser und der Brechzahl des Kerns (2, 7) der direkt anschließenden Glasfaser (1, 6) ist.

4. Faseroptisches Bandfilter nach Anspruch 3, dadurch gekennzeichnet, daß die zwei aneinander anschließenden Doppelkern-Faserabschnitte (10, 11) identisch aufgebaut und gegeneinander verdreht sind

**Claims**

1. A fiber-optic bandpass filter wherein one section of a dual-core fiber (3, 10) is connected at one of its ends with a glass fiber (1) having a light-conducting core (2) and at its other end with another glass fiber (6) having a light-conducting core (7) or with at least one other dual-core fiber section (11), **characterized in** that the two cores (4, 5; 14, 15) of said one dual-core fiber section (3, 10) are selected differently in such a way that their refractive indices are equal at the wavelength to be transmitted ($\lambda_1$) and unequal otherwise, that the length (l) of said one dual-core fiber section (3, 10) is equal to $m \cdot l_1/2$, where $l_1/2$ is the length at which a light wave of wave length $\lambda_1$ couples completely from one core (4; 14) of said one dual-core fiber section to the other core (5; 15), and m is an odd number (m = 1, 3, ...), and that at said one end of said one dual-core fiber section (3; 10), one core (4, 14) of said dual-core fiber section abuts directly on the core (2) of the adjoining, one glass fiber (1), while at the other end, the other core (5, 15) abuts directly on the core (7) of the adjoining other glass fiber (6) or on a core (15') of the adjoining other dual-core fiber section (11).

2. A fiber-optic bandpass filter as claimed in claim 1, characterized in that at least two dual-core fiber sections (10, 11) are joined, each dual-core fiber section having a core (15) equal in diameter to a core (15') of the adjoining dual-core fiber section, and that the dual-core fiber sections (10, 11) are joined in such a way that the cores (15, 15') with the same diameter abut directly on each other.

3. A fiber-optic bandpass filter as claimed in claim 2, characterized in that the diameter and the refractive index of said other core (14, 14') of one of the dual-core fiber sections (10, 11) are equal to the diameter and the refractive index of the core (2, 7) of the adjoining glass fiber (1, 6).

4. A fiber-optic bandpass filter as claimed in claim 3, characterized in that the two adjoining dual-core fiber sections (10, 11) are of identical construction and are rotated by a given amount with respect to each other.

**Revendications**

1. Filtre passe-bande pour fibre optique, dans le cas duquel un tronçon d'une fibre à double coeur (3, 10) est relié, à sa première extrémité, avec une fibre de verre (1) présentant un coeur (2) conducteur de la lumière et, à son autre extrémité, avec une autre fibre de verre (6) présentant un coeur (7) conducteur de la lumière ou au moins avec un autre tronçon (11) de fibre à double coeur, filtre caractérisé par le fait que l'on choisit differents les deux coeurs (4, 5; 14, 15) du premier tronçon (3, 10) de fibre à double coeur de façon que leurs indices effectifs de réfraction du coeur soient égaux pour la longueur d'onde ($\lambda_1$) à transmettre et, par ailleurs, inégaux, qu'en outre la longueur (l) du premier tronçon (3, 10) de la fibre à double coeur est égale à $m \cdot l_1/2$), $l_1/2$ étant la longueur pour laquelle une onde lumineuse de longueur d'onde $\lambda_1$ est parfaitement transmise, depuis le premier coeur (4; 14) du tronçon de fibre à double coeur, dans l'autre coeur (5; 15), m étant un nombre impair (m = 1, 3, ...), et que, respectivement, à la première extrémité du premier tronçon (3; 10), le premier coeur (4, 14) de ce tronçon de fibre à double coeur est directement relié au coeur (2) de la première fibre de verre (1) qui s'y raccorde et, à l'autre extrémité, l'autre coeur (5, 15) est directement relié au coeur (7) de l'autre fibre de verre (6) qui s'y raccorde ou à un coeur (15') de l'autre tronçon (11) de fibre à double coeur qui s'y raccorde.

2. Filtre passe-bande pour fibre optique selon la revendication 1,
   caractérisé par le fait qu'au moins deux tronçons (10, 11) de fibre à double coeur sont aboutés l'un contre l'autre, chaque tronçon de fibre à double coeur présentant un coeur (15) dont le diamètre est égal au diamètre d'un coeur (5') du tronçon de fibre à double coeur abouté, et par le fait que les tronçons (10, 11) de fibre à double coeur sont aboutés l'un contre l'autre de façon que, chaque fois, ce sont les coeurs (15, 15') de même diamètre de coeur qui sont directement raccordés l'un contre l'autre.

3. Filtre passe-bande pour fibre optique selon la revendication 2,
   caractérisé par le fait que le diamètre et l'indice de réfraction de l'autre coeur (14, 14') de l'un des tronçons (10, 11) de fibre à double coeur sont égaux au diamètre et à l'indice de réfraction du coeur (2, 7) de la fibre de verre (1, 6) directement raccordée.

4. Filtre passe-bande pour fibre optique selon la revendication 3,
   caractérisé par le fait que les deux tronçons (10, 11) de fibre à double coeur raccordés l'un contre l'autre sont de structure identique et ont ait l'objet d'une rotation l'un par rapport à l'autre.

FIG.1

FIG.2

FIG.3

FIG.4